(19) Europäisches Patentamt
European Patent Office
Office européen des brevets

(11) EP 4 664 590 A1

(12) **EUROPEAN PATENT APPLICATION**
published in accordance with Art. 153(4) EPC

(43) Date of publication:
**17.12.2025 Bulletin 2025/51**

(21) Application number: **23921956.1**

(22) Date of filing: **17.02.2023**

(51) International Patent Classification (IPC):
***H01M 10/0567*** *(2010.01)*

(52) Cooperative Patent Classification (CPC):
**H01M 10/0567;** Y02E 60/10

(86) International application number:
**PCT/CN2023/076763**

(87) International publication number:
**WO 2024/168806 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Ningde Amperex Technology Limited**
**Ningde, Fujian 352100 (CN)**

(72) Inventors:
- **PENG, Xiexue**
  **Ningde, Fujian 352100 (CN)**
- **LI, Wenqiang**
  **Ningde, Fujian 352100 (CN)**
- **ZHANG, Lilan**
  **Ningde, Fujian 352100 (CN)**
- **TANG, Chao**
  **Ningde, Fujian 352100 (CN)**

(74) Representative: **Icosa**
**83 avenue Denfert-Rochereau**
**75014 Paris (FR)**

# (54) ELECTROLYTE AND ELECTROCHEMICAL DEVICE

(57) This application relates to an electrolyte and an electrochemical device. Specifically, this application provides an electrolyte including a compound of Formula I-A and a compound of Formula I-B:

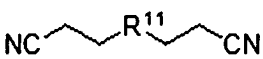 (Formula I-A);

and

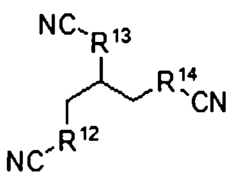

(Formula I-B),

where based on a mass of the electrolyte,
a percentage of the compound of Formula I-A and a percentage of the compound of Formula I-B are each in a range of 0.12% to 5.1%. The electrolyte of this application is conducive to improving the high-temperature storage performance, safety performance, and low-temperature discharge performance of the electrochemical device.

EP 4 664 590 A1

## Description

### TECHNICAL FIELD

This application relates to the field of energy storage, and specifically, to an electrolyte and an electrochemical device.

### BACKGROUND

With the widespread application of electrochemical devices (such as lithium-ion batteries) in various electronic products, users have increasingly high requirements for the performance of electrochemical devices, such as thinner profiles, lighter weight, and higher power. These performances are all related to the high energy density of electrochemical devices. Increasing the charging voltage is one of the primary methods to enhance the energy density of electrochemical devices. However, increasing the charging voltage may lead to instability of positive electrode active materials (especially high-valence transition metals), causing accelerated decomposition and gas production of electrolytes, thus significantly affecting the lifespan and safety performance of the electrochemical devices. Additionally, increasingly high requirements are imposed on the environmental tolerance of the electrochemical devices, such as low-temperature discharge performance. This also places higher requirements on the electrolytes.

In view of this, it is indeed necessary to provide an electrolyte and an electrochemical device that can provide improved high-temperature storage performance and safety performance and maintain good low-temperature discharge performance.

### SUMMARY

This application provides an electrolyte and an electrochemical device, aiming to address at least one problem existing in the related art to at least some extent.

According to one aspect of this application, this application provides an electrolyte including a compound of Formula I-A and a compound of Formula I-B:

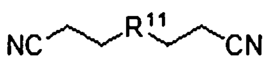 (Formula I-A);

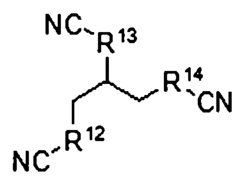

(Formula I-B),

where

$R^{11}$ is selected from a substituted or unsubstituted $C_1$-$C_{10}$ alkylidene group, a substituted or unsubstituted $C_5$-$C_{15}$ cycloalkyl group, or a substituted or unsubstituted $C_6$-$C_{15}$ aryl group;
$R^{12}$, $R^{13}$, and $R^{14}$ are each independently selected from a single bond, a $C_1$-$C_5$ alkylidene group, or a $C_1$-$C_5$ alkoxyalkylidene group; when substitution is performed, substituents are each independently a halogen; and
based on a mass of the electrolyte,
a percentage of the compound of Formula I-A is $X_A$%, with $X_A$ in a range of 0.12 to 5.1, and
a percentage of the compound of Formula I-B is $X_B$%, with $X_B$ in a range of 0.12 to 5.1.

According to an embodiment of this application, $X_A$ is in a range of 0.52 to 4.2, and $X_B$ is in a range of 0.52 to 4.2.

According to an embodiment of this application, $X_A$ is in a range of 1.25 to 3.8, and $X_B$ is in a range of 1.25 to 3.8.

The compound of Formula I-A can stabilize an interface between a positive electrode active material and the electrolyte to some extent, and the compound of Formula I-A has low viscosity. The compound of Formula I-B provides stronger stability to the interface between the positive electrode active material and the electrolyte. The synergistic effect of both compounds can improve the high-temperature storage performance and safety performance of an electrochemical device and allow the electrochemical device to maintain good low-temperature discharge performance.

According to an embodiment of this application, $1.1 \leq X_A + X_B \leq 9.3$.

According to an embodiment of this application, $X_B/X_A$ is not greater than 2.

According to an embodiment of this application, $0.5 \le X_B/X_A \le 1.8$.

According to an embodiment of this application, the compound of Formula I-A includes at least one of the following compounds:

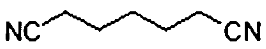, 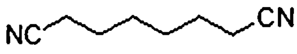, 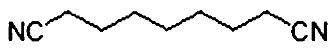,

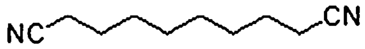, 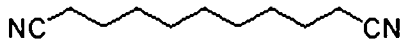,

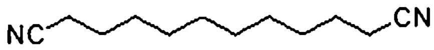, 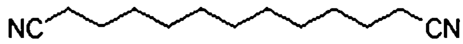,

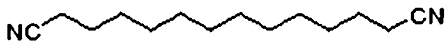, 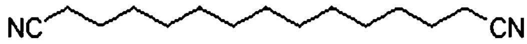,

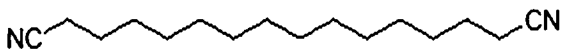, 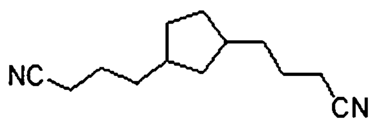,

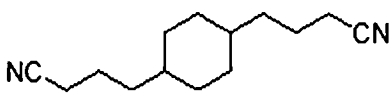, or 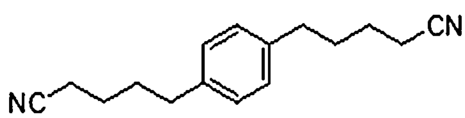.

According to an embodiment of this application, the compound of Formula I-B includes at least one of the following compounds:

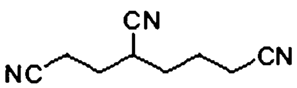, 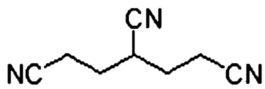, 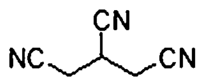,

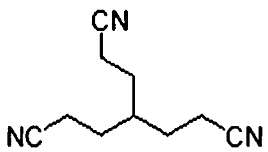, 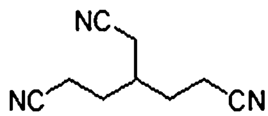, 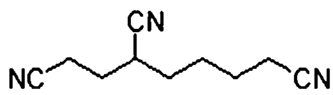,

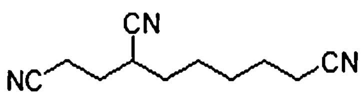, 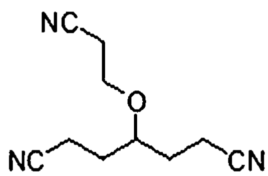, 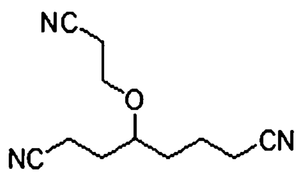,

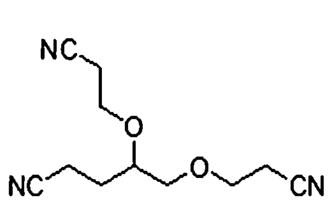, or 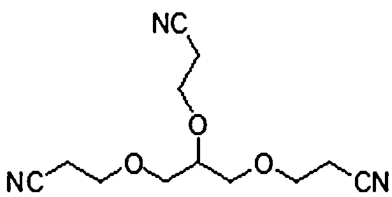.

According to an embodiment of this application, the electrolyte further includes a compound containing a sulfur-oxygen double bond, and based on the mass of the electrolyte, a percentage of the compound containing a sulfur-oxygen double bond is 0.01% to 8%.

According to an embodiment of this application, the compound containing a sulfur-oxygen double bond includes at least one of the following compounds:

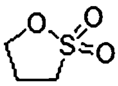, 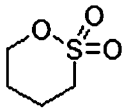, 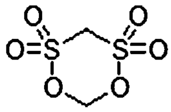, 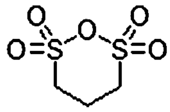, 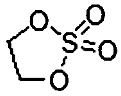, 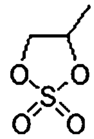,

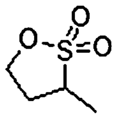, 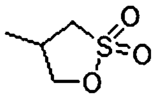, 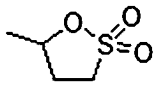, 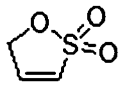, 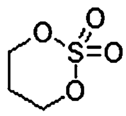, or 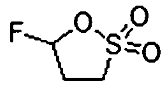.

When the electrolyte further includes a specified percentage of a compound containing a sulfur-oxygen double bond, the stability of a positive electrode interface and a negative electrode interface can be effectively improved without significantly affecting the viscosity of the electrolyte or the impedance of the positive electrode interface and the negative electrode interface, thereby further improving the high-temperature storage performance of the electrochemical device and allowing the electrochemical device to maintain good low-temperature discharge performance.

According to an embodiment of this application, the electrolyte further includes a compound of Formula III, and the compound of Formula III includes at least one of the following compounds:

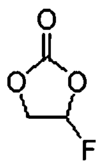, 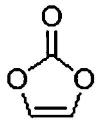, 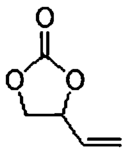, 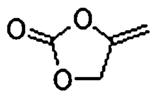, 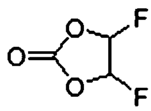, 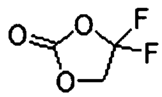,

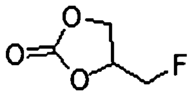, 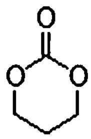, 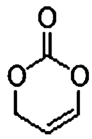, 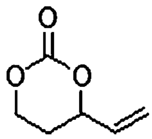, 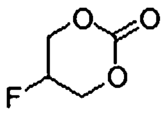, or 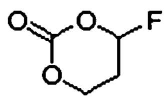;

and

based on the mass of the electrolyte, a percentage of the compound of Formula III is 0.01% to 15%.

When the electrolyte further includes a specified percentage of the compound of Formula III, the negative electrode interface can be fully protected, further improving the cycling performance and high-temperature storage performance of the electrochemical device.

According to an embodiment of this application, the electrolyte further includes a compound IV, and the compound IV includes at least one of the following compounds:

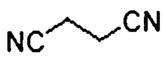, 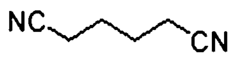, 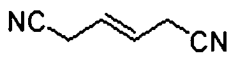, 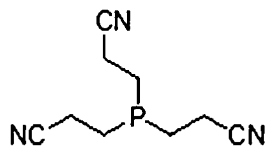,

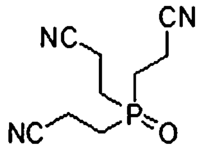 , 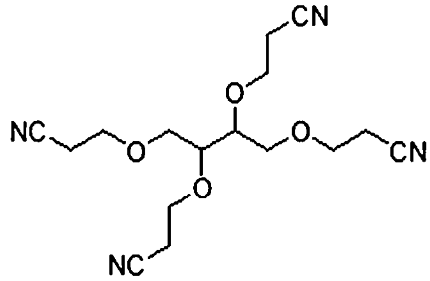 ,

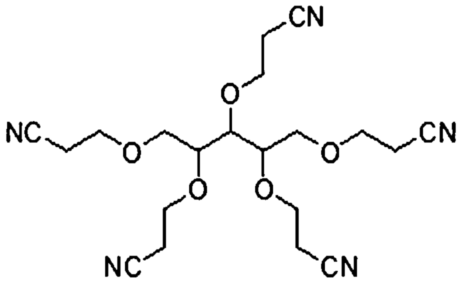 , or 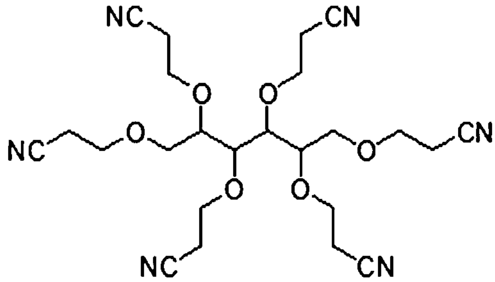 .

According to an embodiment of this application, based on the mass of the electrolyte, a percentage of the compound IV is 0.01% to 5%.

Adding the compound IV to the electrolyte is conducive to further improving the high-temperature storage performance of the electrochemical device and allowing the electrochemical device to maintain good low-temperature discharge performance.

According to an embodiment of this application, the electrolyte further includes a phosphorus-containing lithium salt, and based on the mass of the electrolyte, a percentage of the phosphorus-containing lithium salt is 0.01% to 1%.

According to an embodiment of this application, the phosphorus-containing lithium salt includes at least one of lithium difluorophosphate, lithium difluorobis(oxalate)phosphate, or lithium tetrafluoro(oxalate)phosphate.

According to an embodiment of this application, based on the mass of the electrolyte, the percentage of the phosphorus-containing lithium salt is M%, and $M/X_A$ is not greater than 1.

The electrolyte including the phosphorus-containing lithium salt is conducive to further stabilizing positive electrode active materials (such as high-valence transition metals and oxygen atoms), and can work synergistically with the compound of Formula I-A and the compound of Formula I-B, further improving the high-temperature storage performance of the electrochemical device and allowing the electrochemical device to maintain good low-temperature discharge performance.

According to another aspect of this application, this application provides an electrochemical device including a positive electrode, a negative electrode, a separator, and the electrolyte according to this application.

According to an embodiment of this application, the positive electrode includes a positive electrode active material, and the positive electrode active material contains at least one of the La element, the Y element, or the W element, satisfying at least one of the following conditions:

based on a mass of the positive electrode active material, a mass percentage of the La element is $X_{La}$%, with $0.01 \leq X_{La} \leq 0.5$;
based on a mass of the positive electrode active material, a mass percentage of the Y element is Xy%, with $0.01 \leq X_Y \leq 0.5$; or
based on a mass of the positive electrode active material, a mass percentage of the W element is $X_W$%, with $0.01 \leq X_W \leq 0.5$.

According to an embodiment of this application, the electrochemical device satisfies at least one of the following conditions (a) to (c):

(a) $X_A$ and $X_{La}$ satisfy a relationship: $1 \leq X_A/X_{La} \leq 50$;
(b) $X_A$ and $X_Y$ satisfy a relationship: $1 \leq X_A/X_Y \leq 50$; or
(c) $X_A$ and $X_W$ satisfy a relationship: $1 \leq X_A/X_W \leq 50$.

Introducing the La element, the Y element, and/or the W element into the positive electrode active material can

enhance the structural stability and reversibility of the positive electrode active material, and the Y element can also reduce charge transfer impedance, thereby further improving the cycling performance and safety performance of the electrochemical device.

According to still another aspect of this application, this application provides an electronic apparatus including the electrochemical device according to this application.

This application provides an electrolyte and an electrochemical device. When the electrolyte contains specified percentages of both a compound of Formula I-A and a compound of Formula I-B, the electrolyte has an appropriate viscosity and can stabilize a positive electrode active material, protect a positive electrode interface, and inhibit electrolyte decomposition, thereby significantly improving the high-temperature storage performance and safety performance of the electrochemical device and allowing the electrochemical device to maintain good low-temperature discharge performance.

Additional aspects and advantages of this application will be partially described, shown, or explained through the implementation of some embodiments of this application.

## DETAILED DESCRIPTION

Some embodiments of this application will be described in detail below. These embodiments of this application should not be construed as limiting this application.

In specific embodiments and claims, a list of items connected by the term "at least one of" may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (excluding C); A and C (excluding B); B and C (excluding A); or all of A, B, and C. Item A may include a single element or a plurality of elements. Item B may include a single element or a plurality of elements. Item C may include a single element or a plurality of elements.

The term "hydrocarbon group" covers an alkyl group, an alkenyl group, and an alkynyl group.

The term "alkyl group" refers to a straight-chain saturated hydrocarbon structure having 1 to 20 carbon atoms. The term "alkyl group" is also intended to refer to a branched or cyclic hydrocarbon structure having 3 to 20 carbon atoms. References to an alkyl group with a specific carbon number are intended to cover all geometric isomers with the specific carbon number. Therefore, for example, "butyl group" includes an n-butyl group, a sec-butyl group, an isobutyl group, a tert-butyl group, and a cyclobutyl group; and "propyl group" includes an n-propyl group, an isopropyl group, and a cyclopropyl group. Examples of the alkyl group include but are not limited to a methyl group, an ethyl group, an n-propyl group, an isopropyl group, a cyclopropyl group, an n-butyl group, an isobutyl group, a sec-butyl group, a tert-butyl group, a cyclobutyl group, an n-pentyl group, an isopentyl group, a neopentyl group, a cyclopentyl group, a methylcyclopentyl group, an ethylcyclopentyl group, an n-hexyl group, an isohexyl group, a cyclohexyl group, an n-heptyl group, an octyl group, a cyclopropyl group, a cyclobutyl group, a norbornyl group, and the like.

The term "alkenyl group" refers to a straight-chain or branched monovalent unsaturated hydrocarbon group having at least one and typically 1, 2, or 3 carbon-carbon double bonds. Unless otherwise defined, the alkenyl group generally contains 2 to 20 carbon atoms and includes (for example) a $-C_{2-4}$ alkenyl group, a $-C_{2-6}$ alkenyl group, and a $-C_{2-10}$ alkenyl group. Representative alkenyl groups include (for example) a vinyl group, an n-propenyl group, an isopropenyl group, an n-but-2-enyl group, a but-3-enyl group, and an n-hex-3-enyl group.

The term "alkynyl group" refers to a straight-chain or branched monovalent unsaturated hydrocarbon group having at least one and typically 1, 2, or 3 carbon-carbon triple bonds. Unless otherwise defined, the alkynyl group generally contains 2 to 20 carbon atoms and includes (for example) a $-C_{2-4}$ alkynyl group, a $-C_{3-6}$ alkynyl group, and a $-C_{3-10}$ alkynyl group. Representative alkynyl groups include (for example) an ethynyl group, a prop-2-ynyl group (an n-propynyl group), an n-but-2-ynyl group, and an n-hex-3-ynyl group.

The term "alkylidene group" covers straight-chain and branched alkylidene groups. For example, the alkylidene group may be a $C_1$-$C_{50}$ alkylidene group, a $C_1$-$C_{40}$ alkylidene group, a $C_1$-$C_{30}$ alkylidene group, a $C_1$-$C_{20}$ alkylidene group, a $C_1$-$C_{10}$ alkylidene group, a $C_1$-$C_6$ alkylidene group, a $C_2$-$C_6$ alkylidene group, or a $C_2$-$C_5$ alkylidene group.

The term "alkenylene group" covers straight-chain and branched alkenylene groups. For example, the alkenylene group may be a $C_2$-$C_{50}$ alkenylene group, a $C_2$-$C_{40}$ alkenylene group, a $C_2$-$C_{30}$ alkenylene group, a $C_2$-$C_{20}$ alkenylene group, a $C_2$-$C_{10}$ alkenylene group, or a $C_2$-$C_6$ alkenylene group.

The term "aryl group" refers to a monovalent aromatic hydrocarbon having a monocyclic (for example, a phenyl group) or fused ring. A fused ring system includes fully unsaturated ring systems (for example, naphthalene) and partially unsaturated ring systems (for example, 1,2,3,4-tetrahydronaphthalene). Unless otherwise defined, the aryl group generally contains 6 to 26 carbon ring atoms and includes (for example) a - $C_{6-10}$ aryl group. Representative aryl groups include (for example) a phenyl group, a methylphenyl group, a propylphenyl group, an isopropylphenyl group, a benzyl group, a naphth-1-yl group, and a naphth-2-yl group.

The term "cycloalkyl group" refers to a non-aromatic monocyclic or polycyclic hydrocarbon group composed

solely of carbon and hydrogen atoms, which may include fused or bridged ring systems, having 3 to 15 carbon atoms, preferably having 3 to 10 carbon atoms (a $C_3$-$C_{10}$ cycloalkyl group), and is saturated or unsaturated. Monocyclic groups include a cyclopropyl group, a cyclobutyl group, a cyclopentyl group, a cyclohexyl group, a cycloheptyl group, a cyclooctyl group, and the like. Polycyclic groups include, for example, an adamantane (adamantine) group, a norbornane group, a decalin group, and a 7,7-dimethyl-bicyclo[2.2.1]heptyl group.

The term "alkoxy group" refers to an alkyl group (a -O-alkyl group) connected to a parent structure through an oxygen atom. When a cycloalkyl group is connected to a parent structure through an oxygen atom, the group may also be referred to as a cycloalkoxy group. Examples include a methoxy group, an ethoxy group, a propoxy group, an isopropoxy group, a cyclopropoxy group, a butoxy group, a sec-butoxy group, a tert-butoxy group, a pentoxy group, a cyclohexoxy group, and the like.

The term "alkoxyalkylidene group" refers to an -L-O- group, where L is an alkylidene group. For example, the alkoxyalkylidene group may be an alkoxyalkylidene group with 1-20 carbon atoms, an alkoxyalkylidene group with 1-12 carbon atoms, an alkoxyalkylidene group with 1-5 carbon atoms, an alkoxyalkylidene group with 5-20 carbon atoms, an alkoxyalkylidene group with 5-15 carbon atoms, or an alkoxyalkylidene group with 5-10 carbon atoms.

The term "halogen" may be F, Cl, Br, or I.

With the development of technology and the expansion of application fields, higher requirements have been placed on the energy density and environmental tolerance of electrochemical devices (such as lithium-ion batteries). The primary methods to increase the energy density of electrochemical devices include increasing the charging voltage of the electrochemical devices. However, higher charging voltages accelerate the oxidative decomposition of an electrolyte by positive electrode active materials (such as high-valence transition metals) and cause oxygen release from the positive electrode active materials, which further accelerates the decomposition of the electrolyte, leading to increased gas production in the electrochemical devices, and affecting the safety performance and high-temperature storage performance of the electrochemical device. Additionally, an electrolyte is one of the main factors currently affecting the environmental tolerance of an electrochemical device. When the electrolyte formulation is improved, the impact of viscosity typically needs to be considered. The viscosity of the electrolyte formulation increases under low-temperature conditions, and even solidification may occur, leading to reduced ionic conductivity, thus resulting in poor low-temperature discharge performance of the electrochemical device.

To improve the high-temperature storage performance and safety performance of the electrochemical device and allow the electrochemical device to maintain good low-temperature discharge performance, this application provides an electrolyte including a compound of Formula I-A and a compound of Formula I-B:

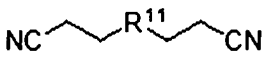 (Formula I-A);

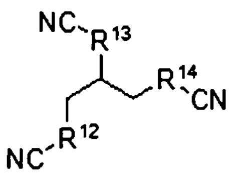 (Formula I-B),

where

- $R^{11}$ is selected from a substituted or unsubstituted $C_1$-$C_{10}$ alkylidene group, a substituted or unsubstituted $C_5$-$C_{15}$ cycloalkyl group, or a substituted or unsubstituted $C_6$-$C_{15}$ aryl group;
- $R^{12}$, $R^{13}$, and $R^{14}$ are each independently selected from a single bond, a $C_1$-$C_5$ alkylidene group, or a $C_1$-$C_5$ alkoxyalkylidene group;
- when substitution is performed, substituents are each independently a halogen; and
- based on a mass of the electrolyte,
- a percentage of the compound of Formula I-A is $X_A$%, with $X_A$ in a range of 0.12 to 5.1, and
- a percentage of the compound of Formula I-B is $X_B$%, with $X_B$ in a range of 0.12 to 5.1.

The compound of Formula I-A, the compound of Formula I-B, and a compound of Formula I-C are all polynitrile compounds. The compound of Formula I-A can stabilize an interface between a positive electrode active material and the electrolyte to some extent, and the compound of Formula I-A has low viscosity. The compound of Formula I-B provides stronger stability to the interface between the positive electrode active material and the electrolyte, but the compound of Formula I-B has higher viscosity. When the percentages of the compound of Formula I-A and the compound of Formula I-B in the electrolyte are too low, the compounds are insufficient to fully stabilize the interface between the positive electrode

active material and the electrolyte, making it difficult to achieve an effective effect. As the percentages of the compound of Formula I-A and the compound of Formula I-B in the electrolyte increase, the compounds improve the high-temperature storage performance and safety performance of the electrochemical device, but further increasing the percentages of the compound of Formula I-A and the compound of Formula I-B in the electrolyte does not continue to enhance the effects. Excessive amounts of the compound of Formula I-A and the compound of Formula I-B increase the viscosity of the electrolyte, which adversely affects the low-temperature discharge performance of the electrochemical device. When the electrolyte contains specific percentages of both the compound of Formula I-A and the compound of Formula I-B, the electrolyte has an appropriate viscosity and can stabilize the positive electrode active material, protect a positive electrode interface, and inhibit electrolyte decomposition, thereby significantly improving the high-temperature storage performance and safety performance of the electrochemical device and allowing the electrochemical device to maintain good low-temperature discharge performance.

In some embodiments, $X_A$ is in a range of 0.15 to 5.0. In some embodiments, $X_A$ is in a range of 0.2 to 4.8. In some embodiments, $X_A$ is in a range of 0.5 to 4.5. In some embodiments, $X_A$ is in a range of 0.52 to 4.2. In some embodiments, $X_A$ is in a range of 1.0 to 4.0. In some embodiments, $X_A$ is in a range of 1.25 to 3.8. In some embodiments, $X_A$ is in a range of 1.5 to 3.5. In some embodiments, $X_A$ is in a range of 2.0 to 3.0. In some embodiments, $X_A$ is 0.12, 0.15, 0.2, 0.5, 0.52, 1.0, 1.5, 2.0, 2.5, 3.0, 3.5, 3.8, 4.0, 4.2, 4.5, 5.0, or 5.1, or falls in a range defined by any two of the above values. The percentage of the compound of Formula I-A in the electrolyte falling in the above ranges is conducive to further improving the high-temperature storage performance and safety performance of the electrochemical device and allowing the electrochemical device to maintain good low-temperature discharge performance.

In some embodiments, $X_B$ is in a range of 0.15 to 5.0. In some embodiments, $X_B$ is in a range of 0.2 to 4.8. In some embodiments, $X_B$ is in a range of 0.5 to 4.5. In some embodiments, $X_B$ is in a range of 0.52 to 4.2. In some embodiments, $X_B$ is in a range of 1.0 to 4.0. In some embodiments, $X_B$ is in a range of 1.25 to 3.8. In some embodiments, $X_B$ is in a range of 1.5 to 3.5. In some embodiments, $X_B$ is in a range of 2.0 to 3.0. In some embodiments, $X_B$ is 0.12, 0.15, 0.2, 0.5, 0.52, 1.0, 1.5, 2.0, 2.5, 3.0, 3.5, 3.8, 4.0, 4.2, 4.5, 5.0, or 5.1, or falls in a range defined by any two of the above values. When the percentage of the compound of Formula I-B in the electrolyte falling in the above ranges is conducive to further improving the high-temperature storage performance and safety performance of the electrochemical device and allowing the electrochemical device to maintain good low-temperature discharge performance.

In some embodiments, $1.1 \leq X_A + X_B \leq 9.3$. In some embodiments, $1.2 \leq X_A + X_B \leq 9.0$. In some embodiments, $1.5 \leq X_A + X_B \leq 8.0$. In some embodiments, $1.9 \leq X_A + X_B \leq 7.8$. In some embodiments, $2.0 \leq X_A + X_B \leq 7.0$. In some embodiments, $2.6 \leq X_A + X_B \leq 6.4$. In some embodiments, $3.0 \leq X_A + X_B \leq 5.0$. In some embodiments, $X_A + X_B$ is 1.1, 1.5, 1.9, 2.0, 2.5, 2.6, 3.0, 3.5, 4.0, 4.5, 5.0, 5.5, 6.4, 6.5, 7.0, 7.5, 7.8, 8.0, 8.5, 9.0, or 9.3, or falls in a range defined by any two of the above values. When the total percentage ($X_A + X_B$) of the compound of Formula I-A and the compound of Formula I-B in the electrolyte falling in the above ranges is conducive to further improving the high-temperature storage performance and safety performance of the electrochemical device and allowing the electrochemical device to maintain good low-temperature discharge performance.

In some embodiments, $X_B/X_A$ is not greater than 2. In some embodiments, $0.5 \leq X_B/X_A \leq 1.8$. In some embodiments, $1.0 \leq X_B/X_A \leq 1.5$. In some embodiments, $X_B/X_A$ is 0.01, 0.05, 0.1, 0.5, 0.8, 1.0, 1.2, 1.5, 1.8, or 2.0, or falls in a range defined by any two of the above values. The ratio ($X_B/X_A$) of the percentage of the compound of Formula I-B to the percentage of the compound of Formula I-A in the electrolyte falling in the above ranges is conducive to further improving the high-temperature storage performance and safety performance of the electrochemical device and allowing the electrochemical device to maintain good low-temperature discharge performance.

In some embodiments, the compound of Formula I-A includes at least one of the following compounds:

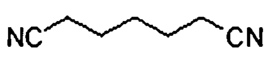 , 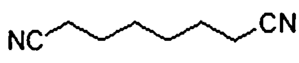 , 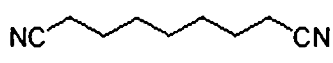 ,

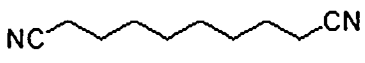 , 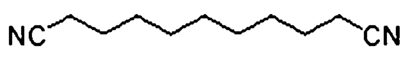 ,

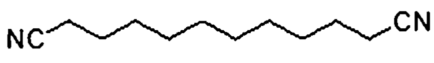 , 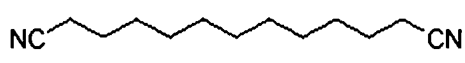 ,

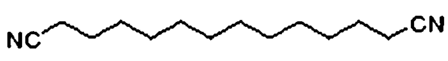 , 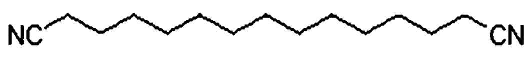 ,

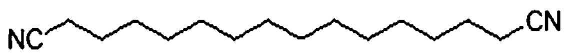,
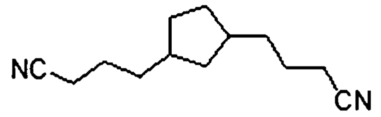,
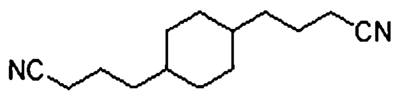, or
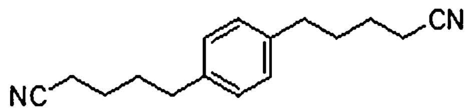.

In some embodiments, the compound of Formula I-B includes at least one of the following compounds:

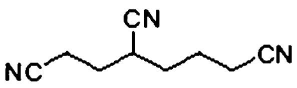,
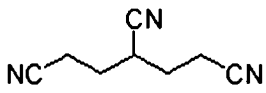,
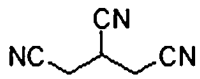,
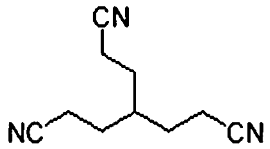,
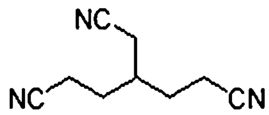,
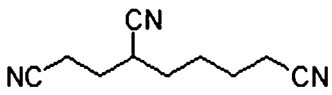,
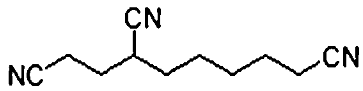,
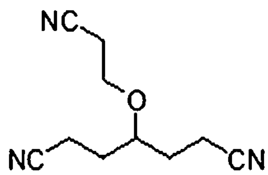,
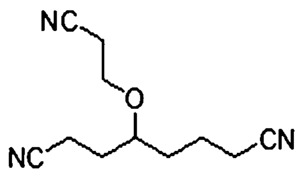,
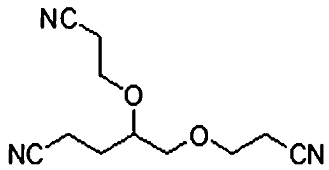, or
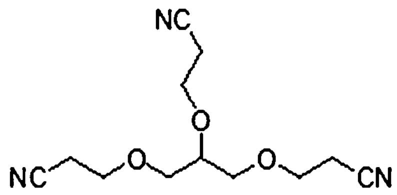.

In some embodiments, the electrolyte further includes a compound containing a sulfur-oxygen double bond, and based on the mass of the electrolyte, a percentage of the compound containing a sulfur-oxygen double bond is 0.01% to 8%. In some embodiments, based on the mass of the electrolyte, the percentage of the compound containing a sulfur-oxygen double bond is 0.05% to 7%. In some embodiments, based on the mass of the electrolyte, the percentage of the compound containing a sulfur-oxygen double bond is 0.1% to 6%. In some embodiments, based on the mass of the electrolyte, the percentage of the compound containing a sulfur-oxygen double bond is 0.5% to 5%. In some embodiments, based on the mass of the electrolyte, the percentage of the compound containing a sulfur-oxygen double bond is 1% to 4%. In some embodiments, based on the mass of the electrolyte, the percentage of the compound containing a sulfur-oxygen double bond is 2% to 3%. In some embodiments, based on the mass of the electrolyte, the percentage of the compound containing a sulfur-oxygen double bond is 0.01%, 0.05%, 0.1%, 0.5%, 1%, 2%, 3%, 4%, 5%, 6%, 7%, or 8%, or falls in a range defined by any two of the above values.

In some embodiments, the compound containing a sulfur-oxygen double bond includes at least one of a compound of Formula II-A and a compound of Formula II-B:

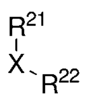 (Formula II-A);

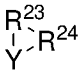 (Formula II-B),

where

X and Y are each independently selected from at least one of

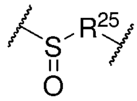,

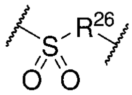, 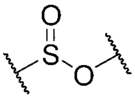, 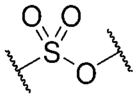, 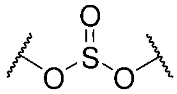, 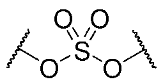, or 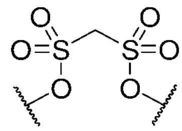,

and

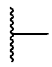

indicates a bonding site between adjacent atoms;
$R^{21}$ and $R^{22}$ are each independently selected from a substituted or unsubstituted $C_1$-$C_5$ alkyl group or a substituted or unsubstituted $C_2$-$C_{10}$ alkenyl group;
$R^{23}$, $R^{24}$, $R^{25}$, and $R^{26}$ are each independently selected from a substituted or unsubstituted $C_1$-$C_5$ alkylidene group or a substituted or unsubstituted $C_2$-$C_{10}$ alkenyl group; and
when substitution is performed, substituents are each independently a halogen or a $C_6$-$C_{10}$ aryl group.

In some embodiments, the compound containing a sulfur-oxygen double bond includes at least one of the following compounds:

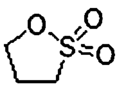, 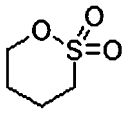, 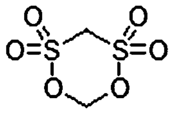, 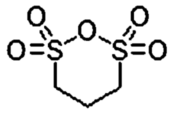, 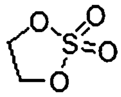, 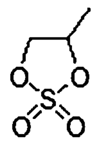,

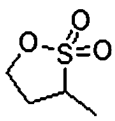, 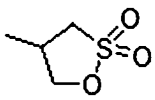, 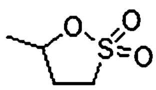, 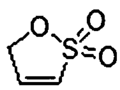, 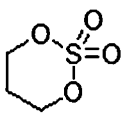, or 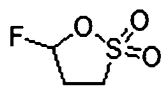.

On one hand, the compound containing a sulfur-oxygen double bond has strong antioxidant capacity, which can improve the stability of the positive electrode interface. On the other hand, the compound containing a sulfur-oxygen double bond can be reduced on a surface of a negative electrode to form a protective film, inhibiting electrolyte decomposition, and further enhancing the stability of a negative electrode interface. When the electrolyte further includes a specified percentage of the compound containing a sulfur-oxygen double bond, the stability of the positive electrode interface and the negative electrode interface can be effectively improved without significantly affecting the viscosity of the electrolyte or the impedance of the positive electrode interface and the negative electrode interface, thereby further improving the high-temperature storage performance of the electrochemical device and allowing the electrochemical device to maintain good low-temperature discharge performance.

In some embodiments, the electrolyte further includes a compound of Formula III:

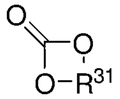 (Formula III),

where

R$^{31}$ is selected from a substituted or unsubstituted $C_1$-$C_6$ alkylidene group or a substituted or unsubstituted $C_2$-$C_6$ alkenylene group;
when substitution is performed, substituents are each independently selected from a halogen, a $C_1$-$C_6$ alkyl group, or a $C_2$-$C_6$ alkenyl group;
in some embodiments, the compound of Formula III includes at least one of the following compounds:

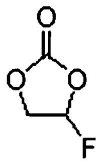, 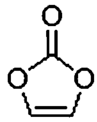, 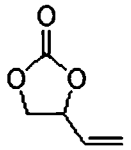, 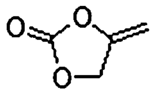, 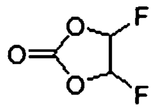, 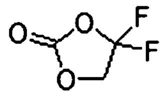,

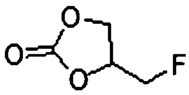, 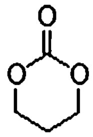, 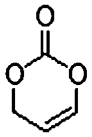, 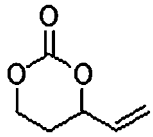, 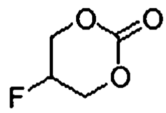, or 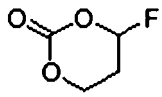;

and
based on the mass of the electrolyte, a percentage of the compound of Formula III is 0.01% to 15%.

In some embodiments, based on the mass of the electrolyte, the percentage of the compound of Formula III is 0.05% to 12%. In some embodiments, based on the mass of the electrolyte, the percentage of the compound of Formula III is 0.1% to 10%. In some embodiments, based on the mass of the electrolyte, the percentage of the compound of Formula III is 0.5% to 8%. In some embodiments, based on the mass of the electrolyte, the percentage of the compound of Formula III is 1% to 5%. In some embodiments, based on the mass of the electrolyte, the percentage of the compound of Formula III is 2% to 4%. In some embodiments, based on the mass of the electrolyte, the percentage of the compound of Formula III is 0.01%, 0.05%, 0.1%, 0.5%, 1%, 2%, 3%, 4%, 5%, 6%, 7%, 8%, 9%, 10%, 11%, 12%, 13%, 14%, or 15%, or falls in a range defined by any two of the above values.

The compound of Formula III can assist in enhancing the film-forming stability of a solid electrolyte interface (SEI) on the negative electrode, increasing the flexibility of the SEI film, enhancing the protective effect on a negative electrode active material, and reducing the contact probability between the negative electrode active material and the electrolyte interface, thereby reducing the impedance of the electrochemical device during cycling. The electrolyte further including a specified percentage of the compound of Formula III can fully protect the negative electrode interface, further improving the cycling performance and high-temperature storage performance of the electrochemical device.

In some embodiments, the electrolyte further includes a compound IV, and the compound IV includes at least one of the following compounds:

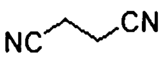, 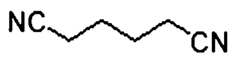, 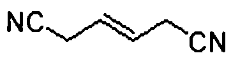, 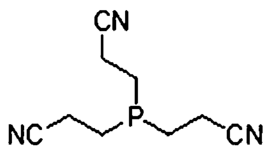,

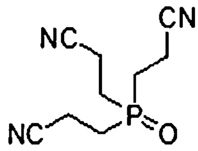,
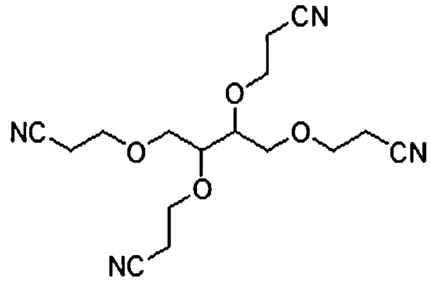,
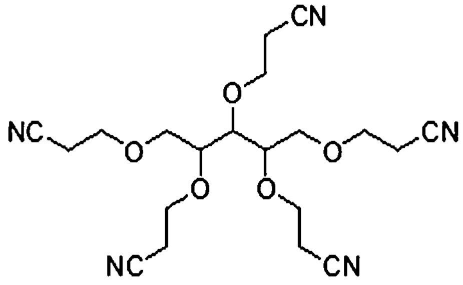, or
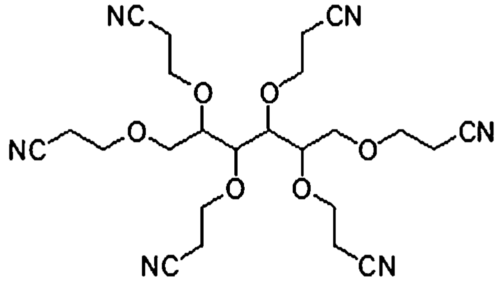.

The compound IV may be a short-chain hydrocarbon compound with two cyano groups (that is, the number of carbon atoms in the hydrocarbon group is less than 5 except carbon atoms in the cyano groups), a compound containing a P=O bond and at least three cyano groups, or a compound containing an ether bond and at least four cyano groups. The short-chain hydrocarbon compound with two cyano groups can work synergistically with the compound of Formula I-A to further protect the positive electrode interface. The compound containing a P=O bond and at least three cyano groups and the compound containing an ether bond and at least four cyano groups can enhance the protection of the positive electrode interface due to the increased number of cyano groups. Therefore, adding the compound IV to the electrolyte is conducive to further improving the high-temperature storage performance of the electrochemical device and allowing the electrochemical device to maintain good low-temperature discharge performance.

In some embodiments, based on the mass of the electrolyte, a percentage of the compound IV is 0.01% to 5%. In some embodiments, based on the mass of the electrolyte, the percentage of the compound IV is 0.05% to 4%. In some embodiments, based on the mass of the electrolyte, the percentage of the compound IV is 0.1% to 3%. In some embodiments, based on the mass of the electrolyte, the percentage of the compound IV is 0.5% to 2%. In some embodiments, based on the mass of the electrolyte, the percentage of the compound IV is 0.01%, 0.05%, 0.1%, 0.5%, 1%, 1.5%, 2%, 2.5%, 3%, 3.5%, 4%, 4.5%, or 5%, or falls in a range defined by any two of the above values. The percentage of the compound IV in the electrolyte falling in the above ranges can further improve the high-temperature storage performance of the electrochemical device and allow the electrochemical device to maintain good low-temperature discharge performance.

In some embodiments, the electrolyte further includes a phosphorus-containing lithium salt, and based on the mass of the electrolyte, a percentage of the phosphorus-containing lithium salt is 0.01% to 1%. In some embodiments, based on the mass of the electrolyte, the percentage of the phosphorus-containing lithium salt is 0.05% to 0.8%. In some embodiments, based on the mass of the electrolyte, the percentage of the phosphorus-containing lithium salt is 0.1% to 0.6%. In some embodiments, based on the mass of the electrolyte, the percentage of the phosphorus-containing lithium salt is 0.2% to 0.5%. In some embodiments, based on the mass of the electrolyte, the percentage of the phosphorus-containing lithium salt is 0.01%, 0.05%, 0.1%, 0.2%, 0.3%, 0.4%, 0.5%, 0.6%, 0.7%, 0.8%, 0.9%, or 1%, or falls in a range defined by any two of the above values.

In some embodiments, the phosphorus-containing lithium salt includes at least one of lithium difluorophosphate, lithium difluorobis(oxalate)phosphate, or lithium tetrafluoro(oxalate)phosphate.

The phosphorus-containing lithium salt is conducive to further stabilizing positive electrode active materials (such as high-valence transition metals and oxygen atoms) and can work synergistically with the compound of Formula I-A and the compound of Formula I-B. The electrolyte further including a specified percentage of the phosphorus-containing lithium salt can further improve the high-temperature storage performance of the electrochemical device and allow the electrochemical device to maintain good low-temperature discharge performance.

In some embodiments, based on the mass of the electrolyte, the percentage of the phosphorus-containing lithium salt is M%, and M/X is not greater than 1. In some embodiments, M/X is 0.01 to 0.8. In some embodiments, M/X is 0.05 to 0.6. In some embodiments, M/X is 0.1 to 0.5. In some embodiments, M/X is 0.2 to 0.4. In some embodiments, M/X is 0.01, 0.02, 0.05, 0.1, 0.2, 0.3, 0.4, 0.5, 0.6, 0.7, 0.8, 0.9, or 1, or falls in a range defined by any two of the above values. M/X falling

in the above ranges further improves the high-temperature storage performance of the electrochemical device and allows the electrochemical device to maintain good low-temperature discharge performance.

In some embodiments, the electrolyte may further include another non-aqueous organic solvent and electrolytic salt. The non-aqueous organic solvent may include at least one of carbonate, carboxylate, ether, or another aprotic solvent. Examples of a carbonate solvent include dimethyl carbonate, diethyl carbonate, ethyl methyl carbonate, methyl propyl carbonate, ethyl propyl carbonate, dipropyl carbonate, ethylene carbonate, propylene carbonate, butylene carbonate, bis(2,2,2-trifluoroethyl) carbonate, and the like. Examples of a carboxylate solvent include methyl acetate, ethyl acetate, n-propyl acetate, n-butyl acetate, methyl propionate, ethyl propionate, propyl propionate, butyl propionate, methyl butyrate, ethyl butyrate, propyl butyrate, butyl butyrate, γ-butyrolactone, 2,2-difluoroethyl acetate, valerolactone, butyrolactone, 2-fluoroethyl acetate, 2,2-ethyl difluoroacetate, ethyl trifluoroacetate, ethyl 2,2,3,3,3-pentafluoropropionate, methyl 2,2,3,3,4,4,4,4-heptafluorobutyrate, methyl 4,4,4-trifluoro-3-(trifluoromethyl)butyrate, ethyl 2,2,3,3,4,4,5,5,5,5-nonafluoropentanoate, methyl 2,2,3,3,4,4,5,5,6,6,7,7,8,8,9,9,9-heptadecafluorononanoate, ethyl 2,2,3,3,4,4,5,5,6,6,7,7,8,8,9,9,9-heptadecafluorononanoate, and the like. Examples of an ether solvent include ethylene glycol dimethyl ether, diethylene glycol dimethyl ether, tetraethylene glycol dimethyl ether, dibutyl ether, tetrahydrofuran, 2-methyltetrahydrofuran, bis(2,2,2-trifluoroethyl) ether, and the like.

In some embodiments, the electrolytic salt includes at least one of an organic lithium salt or an inorganic lithium salt. In some embodiments, the electrolytic salt includes at least one of lithium hexafluorophosphate $LiPF_6$, lithium bis(trifluoromethanesulfonyl)imide $LiN(CF_3SO_2)_2$ (abbreviated as LiTFSI), lithium bis(fluorosulfonyl)imide $LiN(SO_2F)_2$ (abbreviated as LiFSI), lithium hexafluorocesium $LiCsF_6$, lithium perchlorate $LiClO_4$, or lithium trifluoromethanesulfonate $LiCF_3SO_3$.

In some embodiments, based on the mass of the electrolyte, a percentage of the electrolytic salt is 10% to 15%. In some embodiments, based on the mass of the electrolyte, a mass percentage of the electrolytic salt is 12% to 15%. When the percentage of the electrolytic salt falls in the above ranges, the electrolyte has suitable ionic conductivity and viscosity, allowing the electrochemical device to have good rate performance and cycling performance.

This application further provides an electrochemical device. The electrochemical device includes an electrode assembly and an electrolyte, where the electrode assembly includes a positive electrode, a negative electrode, and a separator disposed between the positive electrode and the negative electrode. In some embodiments, the electrolyte is the electrolyte described in this application.

In some embodiments, the negative electrode may include a negative electrode current collector and a negative electrode active material layer disposed on the negative electrode current collector. The negative electrode active material layer may be disposed on one side or both sides of the negative electrode current collector. In some embodiments, the negative electrode current collector may include at least one of a copper foil, an aluminum foil, a nickel foil, or a carbon-based current collector. In some embodiments, a thickness of the negative electrode current collector may be 1 μm to 200 μm. In some embodiments, the negative electrode active material layer may be applied to only a partial region of the negative electrode current collector. In some embodiments, a thickness of the negative electrode active material layer may be 10 μm to 500 μm. It should be understood that these thicknesses are merely examples, and any other suitable thicknesses may be adopted.

In some embodiments, the negative electrode active material layer includes a negative electrode active material. In some embodiments, the negative electrode active material in the negative electrode active material layer includes at least one of lithium metal, natural graphite, artificial graphite, or a silicon-based material. In some embodiments, the silicon-based material includes at least one of silicon, a silicon-oxygen compound, a silicon-carbon compound, or a silicon alloy.

In some embodiments, the negative electrode active material layer may further include a conductive agent and/or a binder. The conductive agent in the negative electrode active material layer may include at least one of carbon black, acetylene black, Ketjen black, lamellar graphite, graphene, carbon nanotubes, carbon fiber, or carbon nanowires. In some embodiments, the binder in the negative electrode active material layer may include at least one of carboxymethyl cellulose (CMC), a polyacrylic acid, a polyacrylate salt, a polyacrylate ester, polyvinylpyrrolidone, polyaniline, polyimide, polyamideimide, polysiloxane, styrene-butadiene rubber, phenolic epoxy resin, polyester resin, polyurethane resin, or polyfluorene. It should be understood that the materials disclosed above are merely examples, and any other suitable materials may be used for the negative electrode active material layer. In some embodiments, a mass ratio of the negative electrode active material, the conductive agent, and the binder in the negative electrode active material layer may be (80-99):(0.5-10):(0.5-10). It should be understood that this is merely an example and is not used to limit this application.

In some embodiments, the positive electrode includes a positive electrode current collector and a positive electrode active material layer disposed on the positive electrode current collector. The positive electrode active material layer may be located on one side or both sides of the positive electrode current collector. In some embodiments, the positive electrode current collector may be an aluminum foil. Certainly, other positive electrode current collectors commonly used in the art may also be used. In some embodiments, a thickness of the positive electrode current collector may be 1 μm to 200 μm. In some embodiments, the positive electrode active material layer may be applied to only a partial

region of the positive electrode current collector. In some embodiments, a thickness of the positive electrode active material layer may be 10 μm to 500 μm. It should be understood that these thicknesses are merely examples, and any other suitable thicknesses may be adopted.

In some embodiments, the positive electrode active material layer includes a positive electrode active material. In some embodiments, the positive electrode active material includes $LiCoO_2$, $LiNiO_2$, $LiMn_2O_4$, $LiCo_{1-y}M_yO_2$, $LiNi_{1-y}M_yO_2$, $LiMn_{2-y}M_yO_4$, and $LiNi_xCo_yMn_zM_{1-x-y-z}O_2$, where M is selected from at least one of Fe, Co, Ni, Mn, Mg, Cu, Zn, Al, Sn, B, Ga, Cr, Sr, V, La, Y, W, or Ti; and $0 \le y \le 1$, $0 \le x \le 1$, $0 \le z \le 1$, and $x + y + z \le 1$. In some embodiments, the positive electrode active material may include at least one of lithium cobaltate, lithium manganate, lithium iron phosphate, lithium iron manganese phosphate, lithium nickel cobalt manganate, lithium nickel cobalt aluminate, or lithium nickel manganate, and the positive electrode active material may undergo doping and/or coating treatment.

In some embodiments, the positive electrode active material contains at least one of the La element, the Y element, or the W element, satisfying at least one of the following conditions:

based on a mass of the positive electrode active material, a mass percentage of the La element is $X_{La}$%, with $0.01 \le X_{La} \le 0.5$;
based on a mass of the positive electrode active material, a mass percentage of the Y element is $X_Y$%, with $0.01 \le X_Y \le 0.5$; or
based on a mass of the positive electrode active material, a mass percentage of the W element is $X_W$%, with $0.01 \le X_W \le 0.5$.

In some embodiments, $0.01 \le X_{La} \le 0.5$. In some embodiments, $0.05 \le X_{La} \le 0.4$. In some embodiments, $0.1 \le X_{La} \le 0.3$. In some embodiments, $X_{La}$ is 0.01, 0.02, 0.05, 0.1, 0.2, 0.3, 0.4, or 0.5, or falls in a range defined by any two of the above values.

In some embodiments, $0.01 \le X_Y \le 0.5$. In some embodiments, $0.05 \le X_Y \le 0.4$. In some embodiments, $0.1 \le X_Y \le 0.3$. In some embodiments, $X_Y$ is 0.01, 0.02, 0.05, 0.1, 0.2, 0.3, 0.4, or 0.5, or falls in a range defined by any two of the above values.

In some embodiments, $0.01 \le X_W \le 0.5$. In some embodiments, $0.05 \le X_W \le 0.4$. In some embodiments, $0.1 \le X_W \le 0.3$. In some embodiments, Xy is 0.01, 0.02, 0.05, 0.1, 0.2, 0.3, 0.4, or 0.5, or falls in a range defined by any two of the above values.

Introducing the La element, the Y element, and/or the W element into the positive electrode active material can enhance the structural stability and reversibility of the positive electrode active material, and the Y element can also reduce charge transfer impedance, thereby improving the cycling performance and safety performance of the electrochemical device.

In some embodiments, the electrochemical device satisfies at least one of the following conditions (a) to (c):

(a) $X_A$ and $X_{La}$ satisfy a relationship: $1 \le X_A/X_{La} \le 50$;
(b) $X_A$ and Xy satisfy a relationship: $1 \le X_A/X_Y \le 50$; or
(c) $X_A$ and $X_W$ satisfy a relationship: $1 \le X_A/X_W \le 50$.

In some embodiments, $5 \le X_A/X_{La} \le 40$. In some embodiments, $10 \le X_A/X_{La} \le 30$. In some embodiments, $15 \le X_A/X_{La} \le 20$.

In some embodiments, $5 \le X_A/X_Y \le 40$. In some embodiments, $10 \le X_A/X_Y \le 30$. In some embodiments, $15 \le X_A/X_Y \le 20$.

In some embodiments, $5 \le X_A/X_W \le 40$. In some embodiments, $10 \le X_A/X_w \le 30$. In some embodiments, $15 \le X_A/X_W \le 20$.

The percentage of the compound of Formula I-A in the electrolyte and the percentage of the La element, the Y element, or the W element in the positive electrode active material satisfying the above relationships is conducive to further improving the cycling performance and safety performance of the electrochemical device.

In some embodiments, the positive electrode active material layer further includes a binder and a conductive agent. In some embodiments, the binder in the positive electrode active material layer may include at least one of polyvinylidene fluoride, a copolymer of vinylidene fluoride-hexafluoropropylene, a styrene-acrylate copolymer, a styrene-butadiene copolymer, polyamide, polyacrylonitrile, a polyacrylate ester, a polyacrylic acid, a polyacrylate salt, sodium carboxymethyl cellulose, polyvinyl acetate, polyvinylpyrrolidone, polyvinyl ether, polymethyl methacrylate, polytetrafluoroethylene, or polyhexafluoropropylene. In some embodiments, the conductive agent in the positive electrode active material layer may include at least one of conductive carbon black, acetylene black, Ketjen black, lamellar graphite, graphene, carbon nanotubes, or carbon fiber. In some embodiments, a mass ratio of the positive electrode active material, the conductive agent, and the binder in the positive electrode active material layer may be (70-98):(1-15):(1-15). It should be understood that the descriptions above are merely examples, and any other suitable materials, thicknesses, and mass

ratios may be adopted for the positive electrode active material layer.

In some embodiments, the separator includes at least one of polyethylene, polypropylene, polyvinylidene fluoride, polyethylene terephthalate, polyimide, or aramid. For example, polyethylene includes at least one of high-density polyethylene, low-density polyethylene, or ultra-high molecular weight polyethylene. In particular, polyethylene and polypropylene have a good effect in preventing short circuits and can improve the stability of a battery through a shutdown effect. In some embodiments, a thickness of the separator is in a range of approximately 3 μm to 500 μm.

In some embodiments, a surface of the separator may further include a porous layer, where the porous layer is disposed on at least one surface of the separator, the porous layer includes at least one of inorganic particles or a binder, the inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconium oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore of the separator has a diameter in a range of approximately 0.01 μm to 1 μm. The binder of the porous layer is selected from at least one of polyvinylidene fluoride, a copolymer of vinylidene fluoride-hexafluoropropylene, polyamide, polyacrylonitrile, a polyacrylate ester, a polyacrylic acid, a polyacrylate salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can enhance the heat resistance, oxidation resistance, and electrolyte infiltration of the separator, and improve the adhesion between the separator and an electrode plate.

In some embodiments of this application, the electrode assembly of the electrochemical device is a wound electrode assembly or a stacked electrode assembly. In some embodiments, the electrochemical device is a lithium-ion battery, but this application is not limited thereto.

In some embodiments of this application, when a lithium-ion battery is used as an example, a positive electrode, a separator, and a negative electrode are sequentially wound or stacked to form an electrode assembly, then the electrode assembly is placed into, for example, an aluminum-plastic film casing for encapsulation, and an electrolyte is injected, followed by formation and packaging to prepare a lithium-ion battery. Then, the prepared lithium-ion battery undergoes performance testing.

Persons skilled in the art will understand that the preparation method of the electrochemical device (for example, a lithium-ion battery) described above is merely an example. Other methods commonly used in the art may be used without departing from the content disclosed in this application.

This application further provides an electronic apparatus including the electrochemical device described in this application. The electronic apparatus of some embodiments of this application is not particularly limited and may be any electronic apparatus known in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc player, a transceiver, an electronic notebook, a calculator, a memory card, a portable recorder, a radio, a backup power supply, a motor, an automobile, a motorcycle, a power-assisted bicycle, a bicycle, a lighting appliance, a toy, a game console, a clock, an electric tool, a flash lamp, a camera, a large household battery, and a lithium-ion capacitor.

The following takes a lithium-ion battery as an example and describes the preparation of the lithium-ion battery in conjunction with specific embodiments. Persons skilled in the art will understand that the preparation method described in this application is merely an example, and any other suitable preparation methods fall in the scope of this application.

## Examples

The following describes the performance evaluation of lithium-ion batteries according to examples and comparative examples of this application.

### I. Preparation of lithium-ion battery

1. Preparation of positive electrode

According to the settings of the examples or comparative examples, lithium cobaltate ($LiCoO_2$) or lithium cobaltate containing doping elements, conductive carbon black, and polyvinylidene fluoride (PVDF) were dissolved in N-methylpyrrolidone (NMP) at a weight ratio of 97.9:0.9:1.2, and fully stirred and mixed well to form a positive electrode slurry. A 13 μm aluminum foil was used as a positive electrode current collector. The positive electrode slurry was applied on the positive electrode current collector, followed by drying, cold pressing, and cutting to obtain a positive electrode. A compacted density of the positive electrode was 4.15 g/cm$^3$.

2. Preparation of negative electrode

Artificial graphite, styrene-butadiene rubber (SBR), and sodium carboxymethyl cellulose (CMC) were dissolved in deionized water at a weight ratio of 97.4:1.4:1.2 to form a negative electrode slurry. A 10 μm thick copper foil was used as a negative electrode current collector. The negative electrode slurry was applied on the negative electrode current collector, followed by drying, cold pressing, and cutting to obtain a negative electrode. A compacted density of the negative electrode was 1.8 $g/cm^3$.

3. Preparation of separator

A separator substrate was a 5 μm thick polyethylene (PE) film,. Both sides of the separator substrate were each coated with a 2 μm thick aluminum oxide ceramic layer, and then both sides of the separator coated with a single ceramic layer were each coated with 2.5 mg of polyvinylidene fluoride (PVDF), and then drying was performed to obtain a separator.

4. Preparation of electrolyte

In an environment with a water content of less than 10 ppm, ethylene carbonate (EC), propylene carbonate (PC), and diethyl carbonate (DEC) were mixed well at a mass ratio of 2:1:7, and an electrolytic salt $LiPF_6$ was dissolved in the above non-aqueous solvents. Then, the resulting solution was mixed well to form a base electrolyte, where a mass percentage of $LiPF_6$ was 12.5%.

According to the settings of the following examples or comparative examples, specified amounts of additives were added to the base electrolyte to obtain the electrolytes of the examples or comparative examples.

The additives used in the examples or comparative examples are shown in the table below:

| Abbreviation /Number | Compound | Abbreviation/ Number | Compound |
|---|---|---|---|
| SN | Succinonitrile | ADN | Adiponitrile |
| HTCN | 1,3,6-hexanetricarbonitrile | TCEP | 1,2,3-tris(2-cyanoethoxy)propane |
| PCEP | 1,2,3,4,5-penta(β-cyanoethoxy)pentane | $LiPO_2F_2$ | Lithium difluorophosphate |
| I-1 | 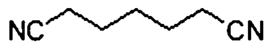 | I-2 | 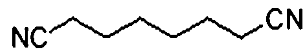 |
| I-3 | 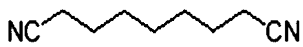 | I-6 | 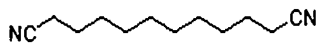 |
| I-10 | 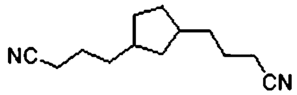 | II-1 | 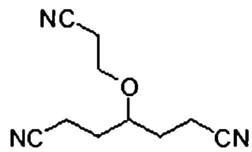 |
| II-2 | 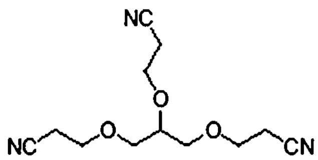 | III-1 | 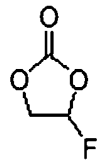 |
| III-2 | 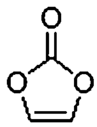 | | |

5. Preparation of lithium-ion battery

The positive electrode, the separator, and the negative electrode were sequentially stacked in order, where the separator is located between the positive electrode and the negative electrode to provide isolation. The resulting stack was

wound to obtain an electrode assembly. The electrode assembly was placed in an outer package aluminum-plastic film. After dehydration was performed at 80°C, the above-mentioned electrolyte was injected and packaging was performed, followed by processes such as formation, degassing, and trimming to obtain a lithium-ion battery.

**II. Testing methods**

1. Testing method for high-temperature storage performance of lithium-ion battery

At 25°C, a lithium-ion battery was charged at a constant current of 0.5C to 4.55 V, then charged at a constant voltage until the current reached 0.05C, and a thickness of the lithium-ion battery was measured and recorded as d0. The lithium-ion battery was placed in an oven at 60°C for 20 days, and then the thickness was measured and recorded as d. A high-temperature storage thickness swelling rate and high-temperature storage voltage drop of the lithium-ion battery were calculated using the following formula:

$$\text{high-temperature storage thickness swelling rate} = (d - d0) / d0 \times 100\%.$$

When the thickness swelling rate of the lithium-ion battery exceeded 50%, the test was stopped.

2. Testing method for safety performance of lithium-ion battery

At 25°C, a lithium-ion battery was charged at a constant current of 0.5C to 4.55 V, then charged at a constant voltage until the current reached 0.02C, and then the sample was placed vertically in a thermal chamber and heated at a heating speed of 2°C/min to 200±2°C and held for 0 min. The time until the lithium-ion battery caught fire or exploded, that was, the failure time was recorded.

3. Testing method for low-temperature discharge performance of lithium-ion battery

At 25°C, a lithium-ion battery was charged at 0.5C to 4.5 V, and charged at a constant voltage of 4.5 V to 0.025C. At 25°C, the lithium-ion battery was discharged at a current of 0.2C to 3.0 V, and a discharge capacity was measured as C0. Then, at 25°C, the lithium-ion battery was charged at 0.5C to 4.5 V, and charged at a constant voltage of 4.5 V to 0.025C. At -20°C, the lithium-ion battery was discharged at a current of 0.2C to 3.0 V, and a discharge capacity was measured as C1. A low-temperature discharge capacity retention rate of the lithium-ion battery was calculated using the following formula:

$$\text{low-temperature discharge capacity retention rate} = C1 / C0 \times 100\%.$$

4. Testing method for cycling performance of lithium-ion battery

At 25°C, a lithium-ion battery was charged at 0.7C to 4.5 V, and charged at a constant voltage of 4.5 V to 0.05C. Then, the lithium-ion battery was discharged at a current of 0.7C to 3.0 V, and a process of charging at 0.7C and discharging at 1C was performed for 800 cycles. Discharge capacities of the 3rd cycle and the 800th cycle were tested. A cycling capacity retention rate of the lithium-ion battery was calculated using the following formula:

Cycling capacity retention rate = discharge capacity of the 800th cycle / discharge capacity of the 3rd cycle × 100%.

**III. Test results**

Table 1 shows the influence of the compound of Formula I-A, the compound of Formula I-B, and their percentages in the electrolyte on the high-temperature storage performance, low-temperature discharge performance, and safety performance of the lithium-ion battery.

**Table 1**

| | Formula I-A compound/polynitrile compound | | Compound of Formula I-B | | $X_B/X_A$ | $X_A+X_B$ | High-temperature storage thickness swelling rate | Low-temperature discharge capacity retention rate | Thermal chamber failure time (min) |
|---|---|---|---|---|---|---|---|---|---|
| | Compound | Percentage $X_A$ (wt%) | Compound | Percentage $X_B$ (wt%) | | | | | |
| Example 1 | I-1 | 1 | HTCN | 0.12 | 0.06 | 1.12 | 24.7% | 87.72% | 68.93 |
| Example 2 | I-1 | 1 | HTCN | 1 | 1 | 2 | 15.8% | 86.96% | 73.65 |
| Example 3 | I-1 | 3 | HTCN | 1 | 0.33 | 4 | 7.1% | 86.05% | 72.03 |
| Example 4 | I-1 | 5 | HTCN | 1 | 0.2 | 6 | 4.5% | 84.75% | 73.50 |
| Example 5 | I-1 | 4.2 | HTCN | 1 | 0.24 | 5.2 | 4.3% | 85.35% | 73.85 |
| Example 6 | I-1 | 0.52 | HTCN | 1 | 1.92 | 1.52 | 21.3% | 87.00% | 70.02 |
| Example 7 | I-1 | 0.12 | HTCN | 1 | 8.33 | 1.12 | 23.5% | 87.03% | 69.39 |
| Example 8 | I-1 | 1 | HTCN | 0.52 | 0.52 | 1.52 | 20.3% | 87.79% | 69.82 |
| Example 9 | I-1 | 1 | HTCN | 2 | 2 | 3 | 10.9% | 85.73% | 72.05 |
| Example 10 | I-1 | 3 | HTCN | 2 | 0.67 | 5 | 5.3% | 83.65% | 73.92 |
| Example 11 | I-1 | 1 | HTCN | 0.9 | 0.9 | 1.9 | 16.5% | 87.09% | 70.63 |
| Example 12 | I-1 | 1 | HTCN | 1.6 | 1.6 | 2.6 | 11.6% | 86.72% | 71.92 |
| Example 13 | I-1 | 3 | HTCN | 3.4 | 1.13 | 6.4 | 4.3% | 82.05% | 74.55 |
| Example 14 | I-1 | 5 | HTCN | 2.8 | 0.56 | 7.8 | 4.2% | 81.60% | 74.42 |
| Example 15 | I-1 | 5.1 | HTCN | 4.2 | 0.9 | 9.3 | 4.1% | 78.52% | 73.87 |
| Example 16 | I-1 | 1 | HTCN | 3 | 2 | 6 | 5.0% | 80.12% | 74.22 |
| | | | TCEP | 1 | | | | | |
| Example 17 | I-2 | 2 | HTCN | 1 | 0.5 | 3 | 7.8% | 86.82% | 72.24 |
| Example 18 | I-3 | 2 | TCEP | 1 | 0.5 | 3 | 7.2% | 86.05% | 72.05 |
| Example 19 | I-6 | 2 | HTCN | 1 | 0.5 | 3 | 6.8% | 86.29% | 72.92 |
| Example 20 | I-1 | 1 | HTCN | 2 | 1 | 4 | 5.9% | 84.82% | 73.89 |
| | I-10 | 1 | | | | | | | |
| Comparative example 1 | I-1 | 1 | - | - | - | - | 26.2% | 87.83% | 68.73 |

(continued)

| | Formula I-A compound/polynitrile compound | | Compound of Formula I-B | | $X_B/X_A$ | $X_A+X_B$ | High-temperature storage thickness swelling rate | Low-temperature discharge capacity retention rate | Thermal chamber failure time (min) |
|---|---|---|---|---|---|---|---|---|---|
| | Compound | Percentage $X_A$ (wt%) | Compound | Percentage $X_B$ (wt%) | | | | | |
| Comparative example 2 | - | - | HTCN | 1 | - | - | 24.2% | 87.06% | 69.25 |
| Comparative example 3 | ADN | 1 | - | - | - | - | 30.5% | 87.89% | 68.12 |
| Comparative example 4 | ADN | 1 | HTCN | 1 | 1 | 2 | 22.3% | 87.01% | 69.78 |
| Comparative example 5 | I-1 | 0.05 | HTCN | 1 | 20 | 1.05 | 24.0% | 87.06% | 69.26 |
| Comparative example 6 | I-1 | 1 | HTCN | 0.05 | 0.05 | 1.05 | 26.0% | 87.79% | 68.82 |

The electrolyte of Comparative example 1 contains only the compound of Formula I-A, the electrolyte of Comparative example 2 contains only the compound of Formula I-B, the electrolyte of Comparative example 3 contains a short-chain dinitrile compound (which does not belong to the compound of Formula I-A) and does not contain the compound of Formula I-B, the electrolyte of Comparative example 4 contains a short-chain dinitrile compound (which does not belong to the compound of Formula I-A) and the compound of Formula I-B. The electrolytes of Comparative examples 5 and 6 contain both the compound of Formula I-A and the compound of Formula I-B, but the percentage of the compound of Formula I-A or the compound of Formula I-B is too low. Although the lithium-ion battery in each of Comparative examples 1 to 6 has a good low-temperature discharge capacity retention rate, the high-temperature storage thickness swelling rate is high, and the thermal chamber failure time is short, failing to meet usage requirements.

As shown in Examples 1 to 20, when the electrolyte contains both 0.12% to 5.1% of the compound of Formula I-A and 0.12% to 5.1% of the compound of Formula I-B, the lithium-ion battery still has a good low-temperature discharge capacity retention rate, a significantly reduced high-temperature storage thickness swelling rate, and a significantly increased thermal chamber failure time, that is, the lithium-ion battery has significantly improved high-temperature storage performance and safety performance and maintains good low-temperature discharge performance.

The percentage of the compound of Formula I-A in the electrolyte falling in the range of 0.52% to 4.2% and the percentage of the compound of Formula I-B falling in the range of 0.52% to 4.2% are conducive to further improving the high-temperature storage performance and safety performance of the lithium-ion battery and allowing the lithium-ion battery to maintain good low-temperature discharge performance.

The sum of the percentage of the compound of Formula I-A and the percentage of the compound of Formula I-B in the electrolyte falling in the range of 1.1% to 9.5%, especially falling in the range of 1.9% to 7.8% or the range of 2.6% to 6.4%, is conducive to further improving the high-temperature storage performance and safety performance of the lithium-ion battery and allowing the lithium-ion battery to maintain good low-temperature discharge performance.

The percentage ($X_B$%) of the compound of Formula I-B and the percentage ($X_A$%) of the compound of Formula I-A in the electrolyte satisfying $X_B/X_A$ being not greater than 2, especially falling in the range of 0.5 to 1.8, is conducive to further improving the high-temperature storage performance and safety performance of the lithium-ion battery and allowing the lithium-ion battery to maintain good low-temperature discharge performance.

Table 2 shows the influence of the compound containing a sulfur-oxygen double bond, the compound IV, the phosphorus-containing lithium salt, and their percentages in the electrolyte on the high-temperature storage performance and low-temperature discharge performance of the lithium-ion battery.

**Table 2**

| | Compound of Formula I-A | | Compound of Formula I-B | | Compound containing sulfur-oxygen double bond | | Compound IV | | Phosphorus-containing lithium salt | | Compound of Formula III | | M/ $X_A$ | High-temperature storage thickness swelling rate | Low-temperature discharge capacity retention rate | Cycling capacity retention rate |
|---|---|---|---|---|---|---|---|---|---|---|---|---|---|---|---|---|
| | Compound | Percentage $X_A$ (wt%) | Compound | Percentage $X_B$ (wt%) | Compound | Percentage (wt%) | Compound | Percentage (wt%) | Compound | Percentage M (wt%) | Compound | Percentage (wt%) | | | | |
| Example 2 | I-1 | 1 | HTCN | 1 | - | - | - | - | - | - | - | - | - | 15.8% | 86.96% | 71.0% |
| Example 17 | I-1 | 1 | HTCN | 1 | II-1 | 0.1 | - | - | - | - | - | - | - | 15.6% | 86.69% | - |
| Example 18 | I-1 | 1 | HTCN | 1 | II-1 | 1 | - | - | - | - | - | - | - | 14.8% | 85.78% | - |
| Example 19 | I-1 | 1 | HTCN | 1 | II-1 | 3 | - | - | - | - | - | - | - | 13.5% | 85.05% | - |
| Example 20 | I-1 | 1 | HTCN | 1 | II-1 | 5 | - | - | - | - | - | - | - | 13.2% | 84.19% | - |
| Example 21 | I-1 | 1 | HTCN | 1 | II-1 | 3 | - | - | - | - | - | - | - | 12.9% | 84.32% | - |
| | | | | | II-2 | 1 | | | | | | | | | | |
| Example 22 | I-1 | 1 | HTCN | 1 | II-1 | 5 | - | - | - | - | - | - | - | 12.5% | 80.43% | - |
| | | | | | 11-2 | 3 | | | | | | | | | | |
| | | | | | II-2 | 3.5 | | | | | | | | | | |
| Example 23 | 1-2 | 1 | HTCN | 1 | 11-1 | 3 | - | - | - | - | - | - | - | 12.5% | 84.62% | - |
| Example 24 | I-1 | 1 | HTCN | 1 | - | - | PCEP | 0.1 | - | - | - | - | - | 15.2% | 86.95% | - |
| Example 25 | I-1 | 1 | HTCN | 1 | - | - | PCEP | 0.5 | - | - | - | - | - | 13.8% | 86.53% | - |
| Example 26 | I-1 | 1 | HTCN | 1 | - | - | PCEP | 1 | - | - | - | - | - | 9.7% | 86.17% | - |
| Example 27 | I-1 | 1 | HTCN | 1 | - | - | PCEP | 2 | - | - | - | - | - | 6.3% | 85.19% | - |
| Example 28 | I-1 | 1 | HTCN | 1 | - | - | PCEP | 5 | - | - | - | - | - | 4.3% | 78.67% | - |

(continued)

| | Compound of Formula I-A | | Compound of Formula I-B | | Compound containing sulfur-oxygen double bond | | Compound IV | | Phosphorus-containing lithium salt | | Compound of Formula III | | M/ $X_A$ | High-temperature storage thickness swelling rate | Low-temperature discharge capacity retention rate | Cycling capacity retention rate |
|---|---|---|---|---|---|---|---|---|---|---|---|---|---|---|---|---|
| | Compound | Percentage $X_A$ (wt%) | Compound | Percentage $X_B$ (wt%) | Compound | Percentage (wt%) | Compound | Percentage (wt%) | Compound | Percentage M (wt%) | Compound | Percentage (wt%) | | | | |
| Example 29 | I-3 | 1 | HTCN | 1 | - | - | PCEP | 1 | - | - | - | - | - | 9.3% | 86.20% | - |
| Example 30 | I-1 | 1 | HTCN | 1 | - | - | - | - | $LiPO_2F_2$ | 0.1 | - | - | 0.1 | 15.5% | 86.89% | - |
| Example 31 | I-1 | 1 | HTCN | 1 | - | - | - | - | $LiPO_2F_2$ | 0.5 | - | - | 0.5 | 14.9% | 85.91% | - |
| Example 32 | I-1 | 1 | HTCN | 1 | - | - | - | - | $LiPO_2F_2$ | 0.7 | - | - | 0.7 | 14.2% | 85.01% | - |
| Compound | Percentage $X_A$ (Wt%) | Compound | Percentage $X_B$ (wt%) | Compound | Percentage (wt%) | Compound | Percentage (wt%) | Compound | Percentage M (wt%) | Compound | Percentage (wt%) | | | | | |
| Example 33 | I-1 | 1 | HTCN | 1 | - | - | - | - | $LiPO_2F_2$ | 1 | - | - | 1 | 13.5% | 84.35% | - |
| Example 34 | I-6 | 1 | HTCN | 1 | - | - | - | - | $LiPO_2F_2$ | 0.5 | - | - | 0.5 | 14.2% | 85.72% | - |
| Example 35 | I-2 | 1 | HTCN | 1 | II-1 | 3 | PCEP | 1 | - | - | - | - | - | 7.9% | 83.63% | - |
| Example 36 | I-3 | 1 | HTCN | 1 | II-1 | 3 | - | - | $LiPO_2F_2$ | 0.5 | - | - | 0.5 | 11.5% | 83.08% | - |
| Example 37 | I-6 | 1 | HTCN | 1 | - | - | PCEP | 1 | $LiPO_2F_2$ | 0.5 | - | - | 0.5 | 9.5% | 85.53% | - |
| Example 38 | I-1<br>1-10 | 0.5<br>0.5 | HTCN | 1 | II-1 | 3 | PCEP | 1 | $LiPO_2F_2$ | 0.5 | - | - | 0.5 | 7.2% | 82.92% | - |
| Example 39 | I-1 | 1 | HTCN | 1 | - | - | - | - | - | - | III-1 | 0.1 | - | 15.6% | - | 71.6% |
| Example 40 | I-1 | 1 | HTCN | 1 | - | - | - | - | - | - | III-1 | 5 | - | 19.2% | - | 76.9% |

(continued)

| Com-pound | Percen-tage $X_A$ (Wt%) | Compound | Percentage $X_B$ (wt%) | Compound | Percen-tage (wt%) | Compound | Percen-tage (wt%) | Compound | Percen-tage M (wt%) | Compound | Percen-tage (wt%) | | | | | |
|---|---|---|---|---|---|---|---|---|---|---|---|---|---|---|---|---|
| Example 41 | I-1 | 1 | HTCN | 1 | - | - | - | - | - | - | III-1 | 5 | - | 18.5% | - | 79.8% |
| | | | | | | | | | | | 111-2 | 1 | | | | |
| Example 42 | I-1 | 1 | HTCN | 1 | II-1 | 3 | - | - | $LiPO_2F_2$ | 0.5 | III-1 | 5 | - | 14.6% | - | 79.1% |
| Example 43 | I-1 | 1 | HTCN | 1 | II-1 | 3 | PCEP | 1 | $LiPO_2F_2$ | 0.5 | III-1 | 5 | - | 9.3% | - | 83.6% |

On the basis of the electrolyte containing both 0.12% to 5.1% of the compound of Formula I-A and 0.12% to 5.1 % of the compound of Formula I-B, adding 0.01% to 8% of the compound containing a sulfur-oxygen double bond, 0.01% to 15% of the compound IV, and/or 0.01% to 1% of the phosphorus-containing lithium salt to the electrolyte can further improve the high-temperature storage performance of the lithium-ion battery and allow the lithium-ion battery to maintain good low-temperature discharge performance. On the basis of the electrolyte containing both 0.12% to 5.1% of the compound of Formula I-A and 0.12% to 5.1% of the compound of Formula I-B, adding 0.01% to 15% of the compound of Formula III to the electrolyte can further improve the cycling performance of the lithium-ion battery.

The percentage of the compound IV in the electrolyte falling in the range of 0.01% to 5% can further improve the high-temperature storage performance of the lithium-ion battery and allow the lithium-ion battery to maintain good low-temperature discharge performance.

The percentage (M%) of the phosphorus-containing lithium salt and the percentage ($X_A$%) of the compound of Formula I-A in the electrolyte satisfying $M/X_A$ not greater than 1 can further improve the high-temperature storage performance of the lithium-ion battery and allow the lithium-ion battery to maintain good low-temperature discharge performance.

Table 3 shows the influence of doping elements and their percentages in the positive electrode active material on the cycling performance and safety performance of the lithium-ion battery.

**Table 3**

| | Compound of Formula I-A | | Compound of Formula I-B | | Element in positive electrode active material | | Ratio of $X_A$ to percentage of element in positive electrode active material | Cycling capacity retention rate | Thermal chamber failure time (min) |
|---|---|---|---|---|---|---|---|---|---|
| | Compound | Percentage $X_A$ (wt%) | Compound | Percentage $X_B$ (wt%) | Element | Percentage (wt%) | | | |
| Example 2 | I-1 | 1 | HTCN | 1 | - | - | - | 71.0% | 70.85 |
| Example 44 | I-1 | 1 | HTCN | 1 | La | 0.02 | 50 | 71.2% | 70.92 |
| Example 45 | I-1 | 1 | HTCN | 1 | La | 0.1 | 10 | 72.3% | 71.28 |
| Example 46 | I-1 | 1 | HTCN | 1 | La | 0.2 | 5 | 73.5% | 72.15 |
| Example 47 | I-1 | 1 | HTCN | 1 | La | 0.5 | 2 | 73.8% | 72.27 |
| Example 48 | I-1 | 1 | HTCN | 1 | Y | 0.1 | 10 | 72.0% | 71.19 |
| Example 49 | I-1 | 1 | HTCN | 1 | W | 0.15 | 6.67 | 72.7% | 71.96 |
| Example 50 | I-1 | 1 | HTCN | 1 | W | 0.2 | 5 | 73.6% | 72.03 |
| Example 51 | I-1 | 1 | HTCN | 1 | La | 0.2 | 5 | 75.3% | 73.62 |
| | | | | | Y | 0.1 | 10 | | |

On the basis of the electrolyte containing both 0.12% to 5.1% of the compound of Formula I-A and 0.12% to 5.1% of the compound of Formula I-B, the positive electrode active material containing 0.01% to 0.5% of the La element, 0.01% to 0.5% of the Y element, and/or 0.01% to 0.5% of the W element is conducive to further enhancing the cycling capacity retention rate of the lithium-ion battery and reducing the high-temperature storage swelling rate of the lithium-ion battery.

The ratio of the percentage ($X_A$) of the compound of Formula I-A in the electrolyte to the percentage ($X_{La}$) of the La element, the percentage ($X_Y$) of the Y element, or the percentage ($X_W$) of the W element in the positive electrode active material satisfying $1 \leq X_A/X_{La} \leq 50$, $1 \leq X_A/X_Y \leq 50$, or $1 \leq X_A/X_W \leq 50$ further enhances the cycling capacity retention rate of the lithium-ion battery and reduces the high-temperature storage swelling rate of the lithium-ion battery.

In this specification, reference to "an embodiment", "some embodiments", "one embodiment", "another example", "an example", "a specific example", or "some examples" means that at least one embodiment or example in this application includes a specific feature, structure, material, or characteristic described in this embodiment or example. Therefore, descriptions in various places throughout this specification, such as "in some embodiments", "in these embodiments", "in an embodiment", "in another example", "in an example", "in a specified example", or "examples" do not necessarily refer to the same embodiment or example in this application. In addition, specific features, structures, materials, or characteristics herein may be combined in any appropriate manner in one or more embodiments or examples.

Although illustrative embodiments have been demonstrated and described, persons skilled in the art should understand that the foregoing embodiments cannot be construed as limitations on this application, and that these embodiments may be changed, replaced, and modified without departing from the spirit, principle, and scope of this application.

## Claims

1. An electrolyte, comprising a compound of Formula I-A and a compound of Formula I-B:

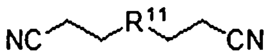 (Formula I-A),

and

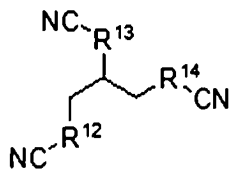 (Formula I-B);

Wherein

$R^{11}$ is selected from a substituted or unsubstituted $C_1$-$C_{10}$ alkylidene group, a substituted or unsubstituted $C_5$-$C_{15}$ cycloalkyl group, or a substituted or unsubstituted $C_6$-$C_{15}$ aryl group;
$R^{12}$, $R^{13}$, and $R^{14}$ are each independently selected from a single bond, a $C_1$-$C_5$ alkylidene group, or a $C_1$-$C_5$ alkoxyalkylidene group;
when substitution is performed, substituents are each independently a halogen; and
based on a mass of the electrolyte,
a percentage of the compound of Formula I-A is $X_A$%, $X_A$ is in a range of 0.12 to 5.1, and
a percentage of the compound of Formula I-B is $X_B$%, $X_B$ is in a range of 0.12 to 5.1.

2. The electrolyte according to claim 1, wherein $X_A$ is in a range of 0.52 to 4.2, and $X_B$ is in a range of 0.52 to 4.2.

3. The electrolyte according to claim 1, wherein $X_A$ is in a range of 1.25 to 3.8, and $X_B$ is in a range of 1.25 to 3.8.

4. The electrolyte according to claim 1, wherein $1.1 \leq X_A + X_B \leq 9.3$.

5. The electrolyte according to claim 1, wherein $X_B/X_A$ is not greater than 2.

6. The electrolyte according to claim 1, wherein $0.5 \leq X_B/X_A \leq 1.8$.

7. The electrolyte according to claim 1, wherein the compound of Formula I-A comprises at least one of the following compounds:

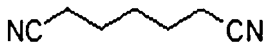 , 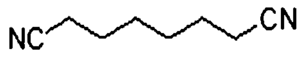 , 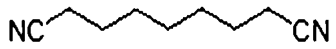 ,

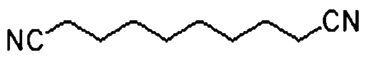 , 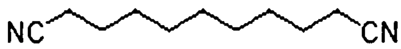 ,

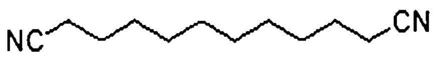 , 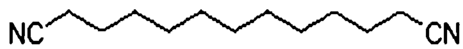 ,

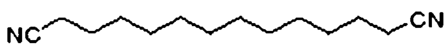 , 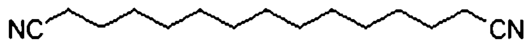 ,

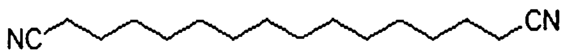 , 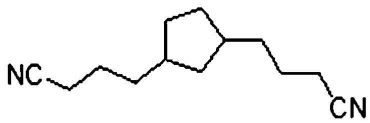 ,

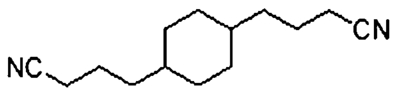 , or 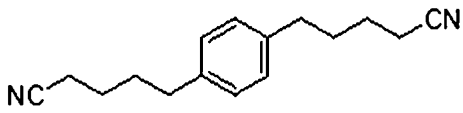 .

8. The electrolyte according to claim 1, wherein the compound of Formula I-B comprises at least one of the following compounds:

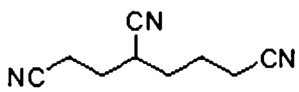 , 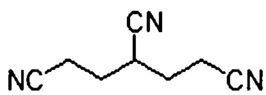 , 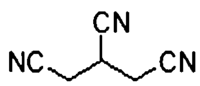 ,

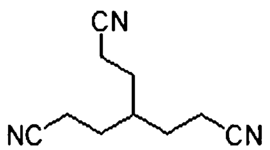 , 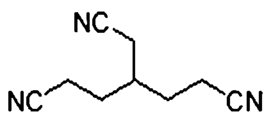 , 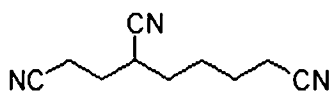 ,

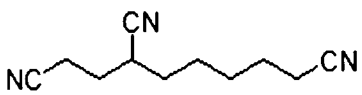 , 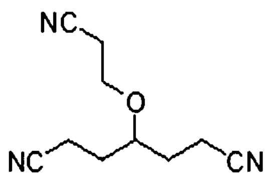 , 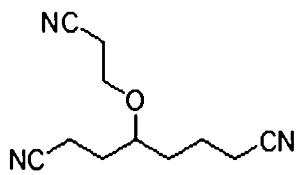 ,

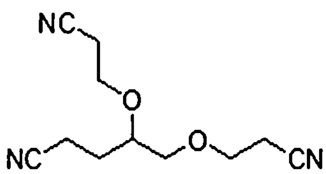 , or 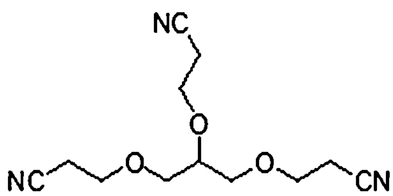 .

9. The electrolyte according to claim 1, wherein the electrolyte further comprises a compound containing a sulfur-oxygen double bond; and based on the mass of the electrolyte, a percentage of the compound containing a sulfur-oxygen double bond is 0.01% to 8%.

10. The electrolyte according to claim 9, wherein the compound containing a sulfur-oxygen double bond comprises at least one of the following compounds:

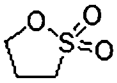, 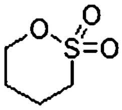, 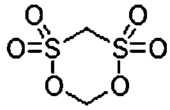, 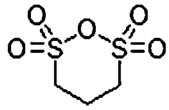, 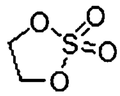, 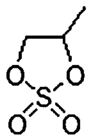, 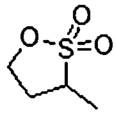,

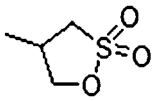, 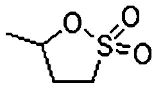, 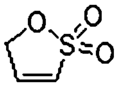, 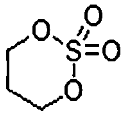, or 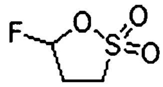.

11. The electrolyte according to claim 1, wherein the electrolyte further comprises a compound of Formula III; and the compound of Formula III comprises at least one of the following compounds:

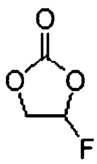, 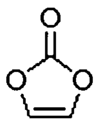, 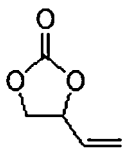, 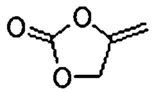, 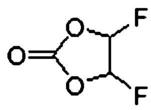, 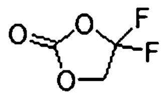,

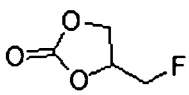, 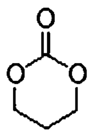, 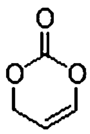, 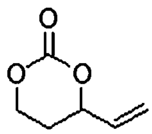, 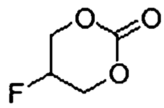, or 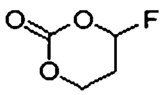;

and

based on the mass of the electrolyte, a percentage of the compound of Formula III is 0.01% to 15%.

12. The electrolyte according to claim 1, wherein the electrolyte further comprises a compound IV; and the compound IV comprises at least one of the following compounds:

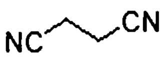, 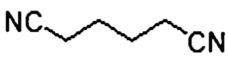, 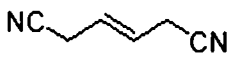, 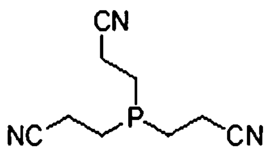,

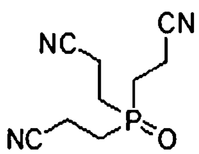, 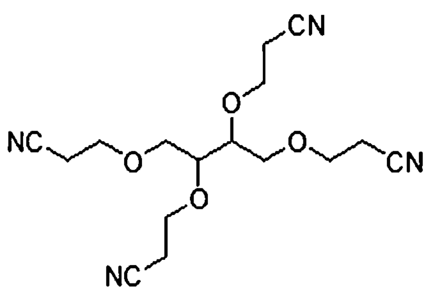,

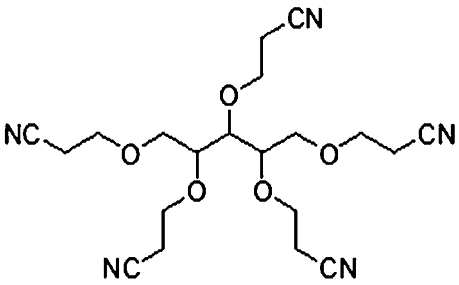
, or
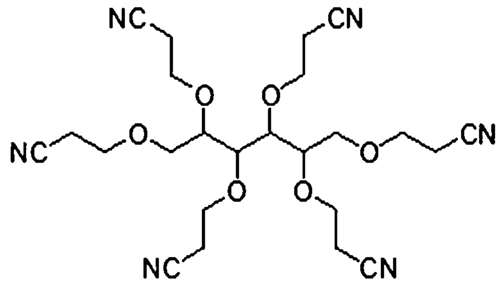
.

**13.** The electrolyte according to claim 12, wherein based on the mass of the electrolyte, a percentage of the compound IV is 0.01% to 5%.

**14.** The electrolyte according to claim 1, wherein the electrolyte further comprises a phosphorus-containing lithium salt; and based on the mass of the electrolyte, a percentage of the phosphorus-containing lithium salt is 0.01% to 1%.

**15.** The electrolyte according to claim 14, wherein the phosphorus-containing lithium salt comprises at least one of lithium difluorophosphate, lithium difluorobis(oxalate)phosphate, or lithium tetrafluoro(oxalate)phosphate.

**16.** The electrolyte according to claim 14, wherein based on the mass of the electrolyte, the percentage of the phosphorus-containing lithium salt is M%, and $M/X_A$ is not greater than 1.

**17.** An electrochemical device, comprising a positive electrode, a negative electrode, a separator, and the electrolyte according to any one of claims 1 to 18.

**18.** The electrochemical device according to claim 17, wherein the positive electrode comprises a positive electrode active material, and the positive electrode active material contains at least one of the La element, the Y element, or the W element, satisfying at least one of the following conditions:

based on a mass of the positive electrode active material, a mass percentage of the La element is $X_{La}$%, with $0.01 \leq X_{La} \leq 0.5$;
based on a mass of the positive electrode active material, a mass percentage of the Y element is $X_Y$%, with $0.01 \leq X_Y \leq 0.5$; or
based on a mass of the positive electrode active material, a mass percentage of the W element is $X_W$%, with $0.01 \leq X_W \leq 0.5$.

**19.** The electrochemical device according to claim 18, wherein the electrochemical device satisfies at least one of the following conditions (a) to (c):

(a) $X_A$ and $X_{La}$ satisfy a relationship: $1 \leq X_A/X_{La} \leq 50$;
(b) $X_A$ and Xy satisfy a relationship: $1 \leq X_A/X_Y \leq 50$; or
(c) $X_A$ and $X_W$ satisfy a relationship: $1 \leq X_A/X_W \leq 50$.

**20.** An electronic apparatus, comprising the electrochemical device according to any one of claims 17 to 19.

**INTERNATIONAL SEARCH REPORT**

International application No.
**PCT/CN2023/076763**

**A. CLASSIFICATION OF SUBJECT MATTER**

H01M 10/0567 (2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 锂离子电池, 正极, 电解液, 二腈, 三腈, 多腈, 掺杂, lithium w ion w battery, cathode, electrolyte, dinitrile, trinitrile, polynitrile, dop+

**C. DOCUMENTS CONSIDERED TO BE RELEVANT**

| Category* | Citation of document, with indication, where appropriate, of the relevant passages | Relevant to claim No. |
|---|---|---|
| X | CN 111801834 A (NINGDE AMPEREX TECHNOLOGY LTD.) 20 October 2020 (2020-10-20)<br>description, paragraphs 79-228 | 1-10, 12, 13, 17, 20 |
| Y | CN 111801834 A (NINGDE AMPEREX TECHNOLOGY LTD.) 20 October 2020 (2020-10-20)<br>description, paragraphs 79-228 | 11, 14-16, 18-19 |
| Y | CN 112687952 A (NINGDE AMPEREX TECHNOLOGY LTD.) 20 April 2021 (2021-04-20)<br>description, paragraphs 72-88 | 11, 14-16 |
| Y | CN 111276746 A (NINGDE AMPEREX TECHNOLOGY LTD.) 12 June 2020 (2020-06-12)<br>description, paragraphs 5-83 | 18,19 |
| X | CN 115621555 A (XIANGHE KUNLUN NEW ENERGY MATERIAL CO., LTD.) 17 January 2023 (2023-01-17)<br>description, paragraphs 8-93 | 1-8, 11-17, 20 |
| A | JP 2009163939 A (DAIKIN KOGYO K. K.) 23 July 2009 (2009-07-23)<br>entire document | 1-20 |

☐ Further documents are listed in the continuation of Box C.

☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 July 2023** | **13 July 2023** |
| Name and mailing address of the ISA/CN<br>**China National Intellectual Property Administration (ISA/CN)**<br>**China No. 6, Xitucheng Road, Jimenqiao, Haidian District, Beijing 100088** | Authorized officer<br><br>Telephone No. |

Form PCT/ISA/210 (second sheet) (July 2022)

**INTERNATIONAL SEARCH REPORT**
**Information on patent family members**

International application No.
**PCT/CN2023/076763**

| Patent document cited in search report | | | Publication date (day/month/year) | Patent family member(s) | | | Publication date (day/month/year) |
|---|---|---|---|---|---|---|---|
| CN | 111801834 | A | 20 October 2020 | WO | 2021243525 | A1 | 09 December 2021 |
| | | | | CN | 111801834 | B | 28 January 2022 |
| | | | | US | 2023105866 | A1 | 06 April 2023 |
| CN | 112687952 | A | 20 April 2021 | | None | | |
| CN | 111276746 | A | 12 June 2020 | CN | 113078362 | A | 06 July 2021 |
| CN | 115621555 | A | 17 January 2023 | | None | | |
| JP | 2009163939 | A | 23 July 2009 | JP | 5245404 | B2 | 24 July 2013 |

Form PCT/ISA/210 (patent family annex) (July 2022)